# EUROPEAN PATENT APPLICATION

(11) **EP 1 202 188 A2**
(43) Date of publication of application: **02.05.2002**
(21) Application number: 01125823.3
(22) Date of filing: 29.10.2001
(51) Int. Cl.: G06F 17/30

(54) **Server devices for displaying web pages**

(30) Priority: 31.10.2000 JP 2000333188
(71) Applicant: Mishou Co., Ltd., Neyagawa-shi, Osaka 572-0019 (JP)
(72) Inventor: Kakei, Masaru, c/o Mishou Co., Ltd., Neyagawa-shi, Osaka 572-0019 (JP); Usui, Shin-ichi, c/o Mishou Co., Ltd., Neyagawa-shi, Osaka 572-0019 (JP)
(74) Representative: Paul, Dieter-Alfred, Dipl.-Ing.

(57) **Abstract**

A web page displaying server device for making it possible to display web pages on a terminal device regardless of the kind of language used for description on the web pages. The server device comprises means for receiving a web page display request from the terminal device, means for receiving web page data demanded by the received web page display request, data conversion means for converting the web page data to data in conformity with the type of the terminal device, and means for transmitting the converted data to the terminal device.

## Description

### BACKGROUND OF THE INVENTION

The present invention relates to web page displaying server devices for making it possible to display web pages on terminal devices irrespective of the kind of the language used for description on the web pages.

Presently, web pages for personal computers (hereinafter referred to as "PCs") are exceedingly greater in number than web pages for portable telephones, and various pieces of information are more readily available by using PCs. Accordingly it is practice to carry so-called notebook PCs to obtain a wide variety of information. However, although made more compact year after year, notebook PCs have the problem of being greater and more difficult to carry than portable telephones.

On the other hand, portable telephones are smaller and easier to carry than notebook PCs, whereas portable telephones have the problem that the web pages prepared for PCs can not be viewed on portable telephones, providing a smaller quantity of information than PCs.

### SUMMARY OF THE INVENTION

An object of the present invention is to overcome the foregoing problems and provide a web page displaying server device for making it possible to display web pages on a terminal device regardless of the kind of language used for description on the web pages.

To solve the foregoing problems, the present invention provides a web page displaying server device for making it possible to display web pages on a terminal device regardless of the kind of language used for description on the web pages, the server device comprising:
means for receiving a web page display request from the terminal device,
means for receiving web page data demanded by the received web page display request,
data conversion means for converting the web page data to data in conformity with the type of the terminal device, and
means for transmitting the converted data to the terminal device.

With the server device described, the data conversion means identifies the type of the terminal device from the display request, converts web page data received from other web page display server device to data in conformity with the type of the terminal device and transmits the converted data to the terminal device, so that the web page can be displayed on the terminal device regardless of the language used for the description on the web page.

The data conversion means of the server device may comprise display size altering means for cutting out a portion of the web page and altering size of the cut-out portion in conformity with the size of the display screen of the terminal device.

With the server device described, the web page can be displayed regardless of the size of the display screen of the terminal device or of the kind of language used for description. Stated more specifically, web pages prepared for use on terminal units having a larger display screen than the above terminal device, such as a portable telephone, can be displayed suitably.

With the server device described, the converted data is preferably image data.

Image data is adapted for universal use and is frequently used in a common data format regardless of the type of terminal devices or kind of language used for description on web pages. Accordingly, if the web page data is converted to image data, the web page can be readily displayed on terminal devices regardless of the kind of language used for description.

The present invention also provides another web page displaying server device for making it possible to display web pages on a terminal device regardless of the kind of language used for description on the web pages, the server device comprising material storing means for storing materials for forming web page data, program storing means for storing a plurality of web page providing programs corresponding respectively to different kinds of description languages, means for receiving a web page display request from the terminal device, terminal type identifying means for identifying the web page description language based on the web page display request, means for selecting one of the web page providing programs based on the identified language, web page creating means for creating web page data by selectively combining materials in the material storing means according to the selected program, and means for transmitting the web page data created to the terminal device.

The web page display server device described is adapted to display the web page stored in the server device on the terminal device regardless of the kind of the web page description language of the terminal device. The web page providing programs correspond respectively to the terminal devices, so that the web page provided by the program is suitable for the corresponding device.

The materials for forming web pages are mainly image data and text data, and may contain sound or voice data.

The web page displaying server device of the present invention is especially effective for use in communications environments wherein portable telephones are adapted for higher transmission speeds in recent years because increases in the quantity of data due to the conversion of web page data from the text type to the image type entail no problem.

### BRIEF DESCRIPTION OF THE DRAWINGS

FIG. 1 is a diagram showing the connection of a web page displaying server device of the invention to the Internet and a portable telephone;
FIG. 2 is a diagram showing the construction of the server device;
FIG. 3 is a flow chart showing a procedure for causing the server device to display a PC web page on the portable telephone;
FIG. 4 is a flow chart showing a procedure for displaying a link web page displayed on the web page;
FIG. 5 is a flow chart showing a procedure for displaying a portion of the displayed web page;
FIG. 6 is a diagram showing the web page in its entirety;
FIG. 7 is a diagram showing the right upper portion of the web page of FIG. 6;
FIG. 8 shows another web page displaying server device as a second embodiment of the invention; and
FIG. 9 is a flow chart showing a procedure for causing the server device to display a web page on the portable telephone.

### DESCRIPTION OF THE PREFERRED EMBODIMENTS

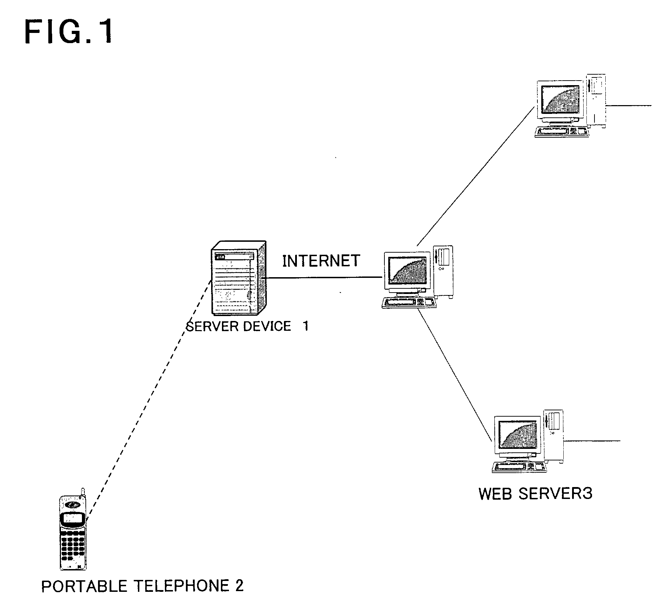

A web page displaying server device 1 as a first embodiment of the invention will be described first with reference to FIGS. 1 to 7.

As shown in FIG. 1, the web page displaying server device 1 is connected to the Internet. The server device 1 is adapted to receive web page data written in HTML (HyperText Markup Language) on other web server (for example, a server indicated at 3 in FIG. 1) different from this server device 1, convert the received data to image data and transmit the image data to a terminal device, such as a portable telephone 2. Thus, the web page data composed of the combination of image data and text data or the like is converted to image data. Further when required, the converted image data is enlarged or reduced in size so that the web page can be displayed without changing the layout on a terminal device having a smaller display screen than PCs and adapted for use with a web page description language different from that used on the PC.

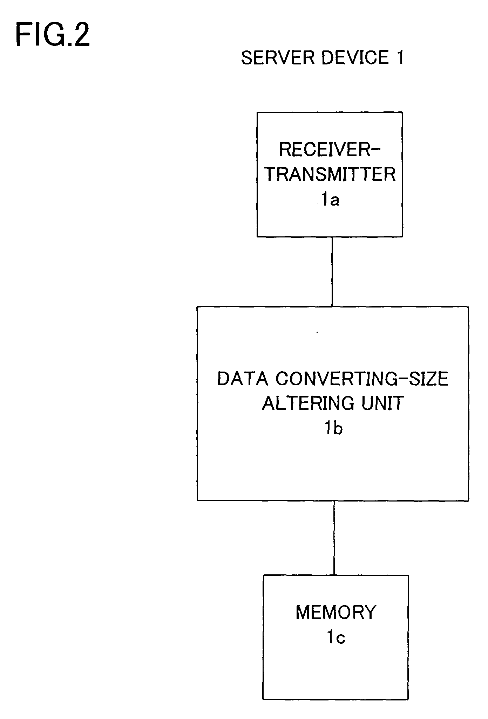

With reference to FIG. 2, the server device 1 of the present invention comprises a receiver-transmitter 1a for receiving web page data and also receiving from the terminal device a web page display request and transmitting converted image data, a data converting-size altering unit 1b for converting web page data written in HTML to image data (hereinafter referred to as "converted image data"), cutting out a portion of the converted image data and altering the size of the image in conformity with the display screen, and a memory 1c for storing the converted image data, etc.

The receiver-transmitter 1a, memory 1c and data converting-size altering unit 1b each have a known construction, and will not be described in detail. For example, the data converting-size altering unit 1b has a construction corresponding to that of the CPU (Central Processing Unit) of a PC.

The web page data described in HTML is converted to image data in the same manner as when the web page data is output to the display or printer in the PC. Stated more specifically, the data converting-size altering unit 1b of the server device 1 has stored therein a program resembling the so-called browser. The web page data written in HTML is developed by this program and converted into image data. The converted image data is temporarily stored in a graphic display buffer incorporated in the data converting unit 1b. Usually the data thus stored in the graphic display buffer is transmitted to an output unit such as a display or printer. In the server device 1, however, the converted image data is stored in the graphic display buffer or cache memory of the data converting unit, or in the memory 1c. The storing means is suitably selected in accordance with the particular processing effected for the converted image data.

The converted image data stored, for example, in the memory 1c of course has information as to the coordinates to be assigned to particular data in displaying. The converted image data as thus stored is processed variously.

The data described in HTML is converted to image data by a known procedure, which will not be described in detail.

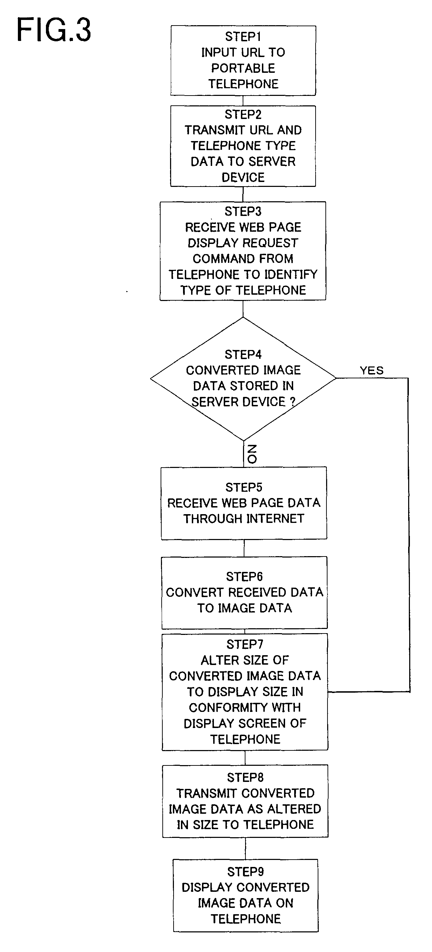

The web page prepared for use on PCs is displayed on the portable telephone 2 by the procedure to be described below with reference to FIG. 3.

Step 1: The desired URL (Uiform Resource Locator) is input to the portable telephone 2.

Step 2: A command to request display of the web page specified by the URL input is transmitted from the portable telephone 2 to the server device 1.

Step 3: The receiver-transmitter 1a of the server device 1 receives the request command, and the data converting-size altering unit 1b identifies the type of the portable telephone 2 from the language of the command.

Step 4: Subsequently, the server device 1 checks whether the converted image data of the web page specified by the URL is stored in the cache memory of the data converting-size altering unit 1b or in the memory 1c. If the converted data is stored, step 7 follows, whereas the sequence proceeds to step 5 if otherwise.

In the absence of the converted data, the sequence proceeds as follows.

Step 5: The receiver-transmitter 1a of the server device 1 receives web page data from the web server 3 through the Internet.

Step 6: The received data, which is described in HTML, is converted to suitable image data such as bitmap data by the data converting-size altering unit 1b of the server device 1.

Step 7: The data converting-size altering unit 1b of the server device 1 reduces the converted image data to a display size suitable to the display screen of the portable telephone 2.

Step 8: The receiver-transmitter 1a of the server device 1 transmits the converted image data as reduced in size to the portable telephone 2.

Step 9: The converted image data as reduced is displayed on the screen of the portable telephone 2.

The web page for PCs is displayed on the portable telephone by the foregoing procedure.

The procedure for altering the size of the converted image data as by enlarging or reduction is already known and therefore will not be described in detail.

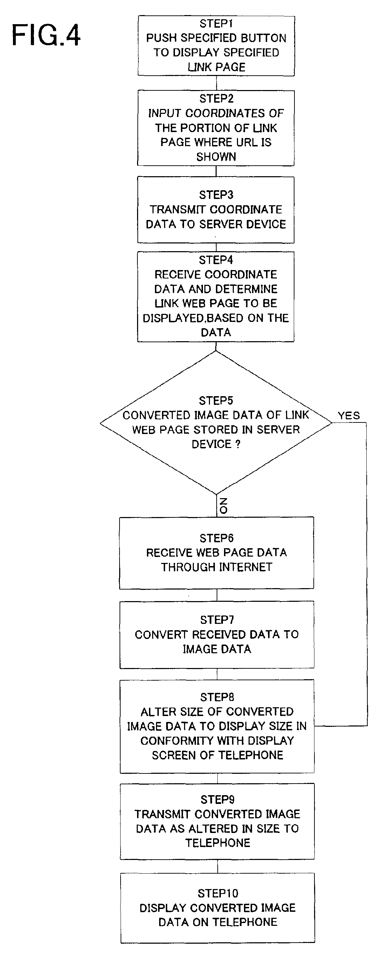

Web pages may be linked to other web pages. Next with reference to FIG. 4, a description will be given of a procedure for displaying a linked link web page in place of the web page currently displayed.

Step 1: A command to display the link web page is transmitted to the server device 1 by pushing a specified button on the portable telephone 2. This step is performed to make distinction between display of a portion of the currently displayed web page as enlarged as will be described later and display of the link web page in place of the currently displayed web page.

Step 2: The coordinates of the portion of the web page on display where the URL of the link web page is linked are input to the telephone 2.

Step 3: The coordinate data is transmitted from the telephone 2 to the server 1.

Step 4: The receiver-transmitter 1a of the server device 1 receives the coordinate data, and the data converting-size altering unit 1b recognizes the link web page requested, as provided in a particular portion of the converted image data, based on the coordinates sent to the server device 1 and the converted image data stored in the device 1.

Step 5: The data converting-size altering unit 1b checks whether the converted image data of the link web page to be displayed is stored in the memory 1c or the like of the device 1. Step 8 follows when the converted image data to be displayed is stored, for example, in the memory 1c. Steps 6 to 10 are the same as steps 5 to 9 of FIG. 3 and will not be described in detail.

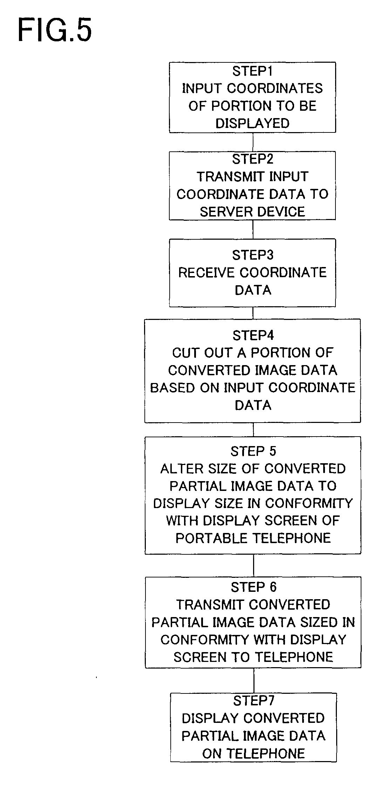

The web page displayed on the screen of the portable telephone 2 in the manner described above is exceedingly smaller than when displayed on the screen of the PC, so that difficulties may be encountered in recognizing characters and images. To obviate the difficulties, the server device 1 of the present invention is adapted to enlarge the required portion only of the web page for display. This procedure will be described below with reference to FIG. 5.

Step 1: The coordinates of the portion of the web page where the characters to be read or the image to be recognized is displayed are input to the portable telephone 1.

Step 2: The coordinate data is sent from the portable telephone to the server device 1.

Step 3: The coordinate data is received by the receiver-transmitter 1a of the server device 1.

Step 4: The data converting-size altering unit 1b of the server device cuts out the portion specified by the coordinates from the converted image data stored in the memory 1c or the like. The cut-out portion will be referred to as the "converted partial image data."

Step 5: The data converting-size altering unit 1b alters the size of the converted partial image data as by reduction in conformity with the size of the display screen of the portable telephone 2.

Step 6: The receiver-transmitter 1a transmits the converted partial image data as reduced to the telephone 2.

Step 7: The converted partial image data is displayed on the portable telephone.

The characters and images in part of the web page thus displayed are larger than those when the web page is displayed in its entirely. This enables the user of the portable telephone to recognize the characters and small images on the web page.

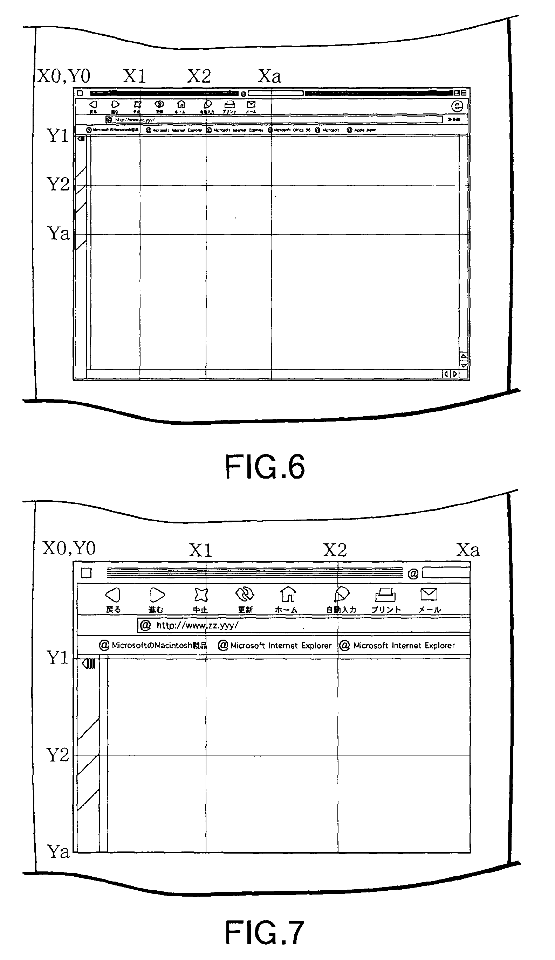

FIG. 6 shows the entire web page as displayed, and FIG. 7 shows the right upper portion of the web page on display. In either case, coordinate axes are indicated around the converted image data. The coordinates are input with reference to the coordinate axes.

With this embodiment, the coordinate system for use in displaying part of the web page is the same as that for displaying the entire web page and is irrelevant to the coordinate system of the display screen. Stated briefly, the coordinate system for the entire web page is used for specifying the part to be displayed or the link web page to be displayed.

Incidentally, the coordinates of the portion to be displayed or the coordinates of a portion indicating the link web page are input by depressing buttons on the portable telephone 2 with reference to the coordinate axes. Further in the case where the vertical-to-horizontal ratio of the portion to be displayed differs from the vertical-to-horizontal ratio of the display screen of the portable telephone 2, this ratio of the display screen of the portable telephone 2 is made to match the vertical-to-horizontal ratio of the portion to be displayed, with reference to one of the vertical and the horizontal of the portion to be enlarged.

When a different portion of the web page is to be displayed, the entire web page is displayed first, and the coordinates of the portion to be displayed are input again, or the screen is scrolled.

Although the foregoing embodiment is adapted to display on portable telephones web page data prepared for use on PCs, the present invention is not limited only to this case. The invention is applicable, for example, also when web pages for a portable telephone of certain type are to be viewed on a portable telephone of the old type having a relatively small display screen. In such a case, the portable telephones may be different in the method of communication or in the language for use in description on the web pages. Stated more specifically, the web page data described in a language suited to portable telephones of the specified type is converted to image data. This makes it possible to correctly display the web page regardless of the communication method of telephones or the description language.

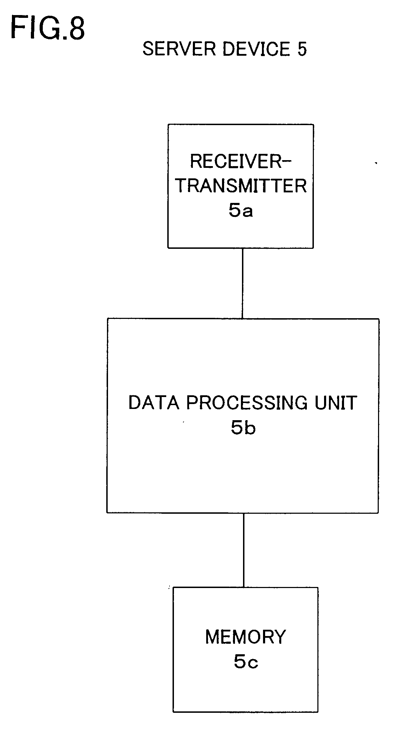

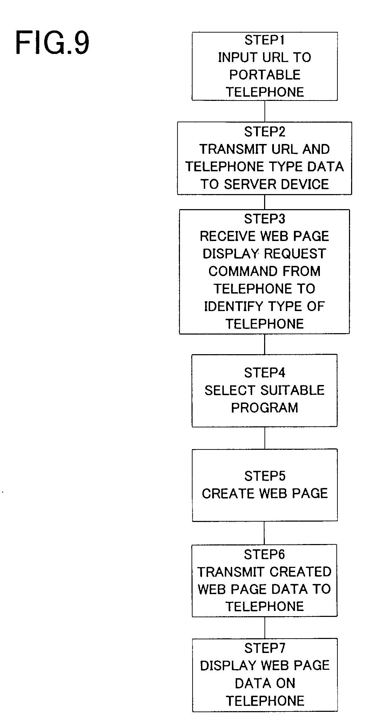

Another web page displaying server device 5 as a second embodiment of the invention will be described next with reference to FIGS. 8 and 9. The server device 5 makes it possible to display web pages stored in this device 5 on any terminal regardless of the kind of description language.

With reference to FIG. 8, the web page displaying server device 5 comprises a suitable receiver-transmitter 5a, a data processing unit 5b having a CPU and a data memory 5c such as a hard disk. These components are already known and will not be described in detail.

The memory 5c has stored therein materials for forming web pages, such as image data and text data, and web page providing programs described respectively in different web page description languages. Stated more specifically, the memory 5c has stored therein a plurality of web page providing programs prepared for one web page and different in the kind of language for describing the web page.

With the server device 5 as is the case with the server device 1 of the first embodiment, the receiver-transmitter 5a also receives a command to request web page display, for example, from a portable telephone, and the data processing unit 5b checks the command for language to thereby identify the type of the portable telephone and the web page description language.

When the description language is identified, the web page providing program suited to the type and the description language is selected from the memory 5c by the data processing unit 5b. Using the selected program, the data processing unit 5b provides a web page suitable to the terminal from the combination of materials, such as image data and text data, selectively retrieved from the memory 5c. The receiver-transmitter 5a transmits the web page data to the portable telephone.

Incidentally, the image data may be converted depending on the type of portable telephone. The memory 5c usually has stored therein so-called jpeg image data. The jpeg image data is converted to so-called png image data, which is transmitted to the portable telephone if the telephone is designed to display png image data only. The image data is converted by the data processing unit 5b using known means. Both jpeg image data and png image data may be stored in the memory 5c in combination.

Using the server device 5 as the second embodiment of the invention, the web page is displayed on a portable telephone by the procedure to be described below with reference to FIG. 9.

Step 1: The URL of the desired web page among the web pages stored in the server device 5 is input to the portable telephone.

Step 2: A command to request display of the web page is transmitted from the portable telephone to the server device 5. This request command contains the input URL and data as to the type of the portable telephone.

Step 3: The receiver-transmitter 5a receives the request command, and the processing unit 5b checks the command for language to thereby identify the type of the portable telephone.

Step 4: The processing unit 5b selects from the memory 5c the program describing the web page specified by the received URL and suitable to the type making the request.

Step 5: According to the selected program, the processing unit 5b retrieves image data and text data from the memory 5c in combination and positions the data items in a suitable arrangement to create a web page. At this time, the image data is converted to suitable data as required and previously stated.

Step 6: The web page data created is transmitted from the receiver-transmitter 5a to the portable telephone.

Step 7: The web page data is displayed on the screen of the portable telephone.

The web page thus created is formed in description language suited to the terminal device displaying the page, and can therefore be handled in the same manner as those specific to the terminal device. Although the foregoing embodiment has been described with reference to a case where the web page data is transmitted to a portable telephone, web page data suitable not only to the portable telephone but also to other portable device or PC can be transmitted.

The foregoing two embodiments, i.e., the server devices 1 and 5, make it possible to prepare a web page which can be displayed optimally on every one of display screens which are different in the number of pixels, by detecting the area of screen, i.e., the number of pixels, not only from the terminal device type data but from the data contained in the request command.

More detailed information as to the terminal device, which is not contained in the request command, for example, information as to the number of colors usable for displaying image data, or the information as to the particular browser (web page reading program) used, may be transmitted to the server device 1 or 5 by the user of the terminal device and received by the receiver-transmitter 1a or 5a. Further details of information as the portable telephone can then be obtained easily to make it possible to transmit web page data which is well suited to the portable telephone requesting web page display.

## Claims

1. A web page displaying server device for making it possible to display web pages on a terminal device regardless of the kind of language used for description on the web pages, the server device comprising:
means for receiving a web page display request from the terminal device,
means for receiving web page data demanded by the received web page display request,
data conversion means for converting the web page data to data in conformity with the type of the terminal device, and
means for transmitting the converted data to the terminal device.

2. A web page displaying server device according to claim 1 wherein the data conversion means comprises size altering means for cutting out a portion of the web page and altering size of the cut-out portion in conformity with the size of the display screen of the terminal device.

3. A web page displaying server device according to claim 1 or 2 wherein the converted data is image data.

4. A web page displaying server device for making it possible to display web pages on a terminal device regardless of the kind of language used for description on the web pages, the server device comprising:
material storing means for storing materials for forming web page data,
program storing means for storing a plurality of web page providing programs corresponding respectively to different kinds of description languages,
means for receiving a web page display request from the terminal device,
terminal type identifying means for identifying the web page description language based on the web page display request,
means for selecting one of the web page providing programs based on the identified language,
web page creating means for creating web page data by selectively combining materials in the material storing means according to the selected program, and
means for transmitting the web page data created to the terminal device.
